(19) Europäisches Patentamt
European Patent Office
Office européen des brevets

(11) **EP 4 320 006 B1**

(12) **EUROPEAN PATENT SPECIFICATION**

(45) Date of publication and mention
of the grant of the patent:
**19.02.2025  Bulletin 2025/08**

(21) Application number: **21717444.0**

(22) Date of filing: **08.04.2021**

(51) International Patent Classification (IPC):
*B60L 7/10* (2006.01)   *B60L 7/24* (2006.01)
*B60L 15/20* (2006.01)   *B60L 58/12* (2019.01)
*B62D 35/00* (2006.01)

(52) Cooperative Patent Classification (CPC):
**B60L 7/10; B60L 7/24; B60L 15/2009;**
**B60L 15/2018; B60L 58/12; B62D 35/001;**
**B62D 37/02;** B60L 2200/36; B60L 2240/642;
B60L 2260/50

(86) International application number:
**PCT/EP2021/059238**

(87) International publication number:
**WO 2022/214190 (13.10.2022 Gazette 2022/41)**

(54) **METHODS AND DEVICES FOR BRAKING OF A HEAVY-DUTY VEHICLE**

BREMSVERFAHREN UND -VORRICHTUNGEN VON EINEM SCHWERLASTFAHRZEUG

PROCÉDÉS ET DISPOSITIFS DE FREINAGE DE VÉHICULE UTILITAIRE LOURD

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**14.02.2024  Bulletin 2024/07**

(73) Proprietor: **VOLVO TRUCK CORPORATION**
**405 08 Göteborg (SE)**

(72) Inventors:
• **LARSSON, Lena**
**426 74 Västra Frölunda (SE)**
• **LAINE, Leo**
**414 84 Göteborg (SE)**
• **RYDSTRÖM, Mats**
**427 39 Billdal (SE)**

(74) Representative: **Ström & Gulliksson AB**
**P.O. Box 4188**
**203 13 Malmö (SE)**

(56) References cited:
CN-A- 102 358 158      CN-A- 107 215 213
JP-B2- 6 061 896       US-A- 4 824 165
US-A1- 2021 024 144

**Description**

TECHNICAL FIELD

The present disclosure relates to heavy-duty vehicles such as semi-trailer vehicles for cargo transport, and in particular to arrangements for decelerating the heavy-duty vehicle. The arrangements are suitable for providing sufficient braking torque, also for extended periods of time. Although the invention will be described mainly with respect to semi-trailer vehicles and trucks, the invention is not restricted to this particular type of vehicle but may also be used in other types of heavy-duty vehicles.

BACKGROUND

A heavy-duty vehicle, such as a truck or semi-trailer vehicle, normally comprises a service brake system based on friction brakes. Friction brakes, such as disc brakes or drum brakes, are not capable of prolonged periods of use which may occur when driving downhill for an extended period of time. If the friction brakes are used too intensively, a phenomenon referred to as brake fading may occur. Brake fading is caused by a build-up of heat in the braking surfaces and leads to significantly reduced braking capability. To avoid brake fading, heavy-duty vehicles often comprise auxiliary brakes capable of endurance braking, such as engine brakes and various retarder systems.

Electric machines can also be used to brake a vehicle, i.e., to generate braking torque. The electric machine then acts as a generator which converts the kinetic energy from the vehicle into electrical energy. This electrical energy can be fed to an electrical energy storage system (ESS) such as a rechargeable battery, or to a brake resistor which dissipates the electrical energy as heat.

Electric machines do not suffer from brake fading, but since the total energy absorption capability of the ESS and brake resistor is limited, the electric machine may still not be able to perform endurance braking for prolonged periods of time. Thus, either additional means for braking need to be installed in the vehicle, or the requirements on the electrical energy system of the vehicle must be over-dimensioned to support endurance braking, which is undesired. CN107215213 describes an example of such a vehicle type.

There is a continuing need for further improvements in braking arrangements for heavy-duty vehicles. It is also desired to simplify control of the ESS system on the vehicle.

SUMMARY

It is an object of the present disclosure to provide improvements in braking arrangements for heavy-duty vehicles. This object is at least in part obtained by a method for adapting air resistance of a heavy-duty vehicle. The vehicle comprises at least one electric machine arranged for regenerative braking, one or more energy absorption devices arranged to receive energy from the at least one electrical machine during regenerative braking, and a variable air resistance arrangement arranged to provide a range of different air resistances of the vehicle. The method comprises: obtaining a current energy absorption capability of the one or more energy absorption devices; obtaining an expected energy generation from regenerative braking during a planned route of the vehicle and during a nominal value of air resistance of the vehicle; determining a desired air resistance of the vehicle from the range of different air resistances of the vehicle based on the current energy absorption capability and the expected energy generation; and causing adaption of the variable air resistance arrangement according to the desired air resistance.

It is desirable to be able to control the energy generation from regenerative braking, especially during extended periods of downhill sections of a planned route. The variable air resistance arrangement can be adapted to increase or decrease an actual energy generation from regenerative braking during the planned route (relatively to the expected energy generation). If the actual air resistance is changed from a nominal value, more or less negative torque is required from the at least one electric machine to provide the same braking torque to slow down the vehicle. Thus, the present disclosure improves braking and regenerative energy management by arranging a range of different air resistances of the vehicle in dependent of different scenarios. For example, if a surplus of energy is expected, e.g., more than what is required to fully charge a battery, the air resistance may be increased, while air resistance can be reduced down to a minimum in case of an energy shortage in the battery. Furthermore, the range of different air resistances of the vehicle reduces the need for over dimensioning the energy absorption devices and/or the need for additional braking means required for endurance braking.

According to aspects the desired air resistance is larger than or equal to the nominal value if the expected energy generation is larger than or equal to the current energy absorption capability. According to other aspects, the desired air resistance is lower than or equal to the nominal value if the expected energy generation is lower than or equal to the current energy absorption capability.

According to aspects, the variable air resistance arrangement comprises any of: a variable suspension of the vehicle, a variable spoiler arranged on the vehicle, and a variable deflector arranged on the vehicle. The variable spoiler and the variable suspension may already be present on existing heavy-duty vehicles. In that case, minimum alterations are required on existing vehicles to implement the disclosed method. The variable deflector may provide additional variable air resistance if desired.

According to aspects, one of the one or more energy absorption devices is an electronic storage system (ESS). In that case, the method may further comprise obtaining a current state of charge (SoC) of the ESS. Then, the desired air resistance of the vehicle may be determined based on the current energy absorption capability, the expected energy generation, and the current SoC.

According to aspects, the desired air resistance is larger than or equal to the nominal value if the SoC is larger than or equal to a predetermined threshold. If, e.g., the battery is empty it may be desirable to decrease the desired air resistance to increase the actual energy generation. According to further aspects, the desired air resistance is lower than or equal to the nominal value if the SoC is lower than or equal to a predetermined threshold. There is also disclosed herein a computer program comprising program code means for performing any of the steps discussed above when said program is run on a computer or on processing circuitry of an electronic control unit (ECU).

There is also disclosed herein a computer readable medium carrying a computer program comprising program code means for performing any of the steps discussed above when said program product is run on a computer or on processing circuitry of an ECU.

There is also disclosed herein an ECU for adapting air resistance of a heavy-duty vehicle. The vehicle comprises at least one electric machine arranged for regenerative braking, one or more energy absorption devices arranged to receive energy from the at least one electrical machine during regenerative braking, and a variable air resistance arrangement arranged to generate a range of different air resistances of the vehicle. The ECU is arranged to: obtain a current energy absorption capability of the one or more energy absorption devices; obtain an expected energy generation from regenerative braking during a planned route of the vehicle and during a nominal value of air resistance of the vehicle; determine a desired air resistance of the vehicle based on the current energy absorption capability and the expected energy generation; and causing adaption of the variable air resistance arrangement according to the desired air resistance.

There is also disclosed herein a vehicle comprising the ECU according to the discussion above.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the claims of the present invention

BRIEF DESCRIPTION OF THE DRAWINGS

With reference to the appended drawings, below follows a more detailed description of embodiments of the invention cited as examples. In the drawings:

Figures 1-2     show example heavy-duty vehicles;
Figure 3        schematically illustrates functions of a vehicle control system;
Figure 4A       illustrates the height versus a route;
Figure 4B       illustrates torque versus motor speed;
Figure 4C       illustrates some example heavy-duty vehicle use cases;
Figure 5        is a flow chart illustrating a method;
Figure 6        schematically illustrates a control unit; and
Figure 7        shows an example computer program product.

DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

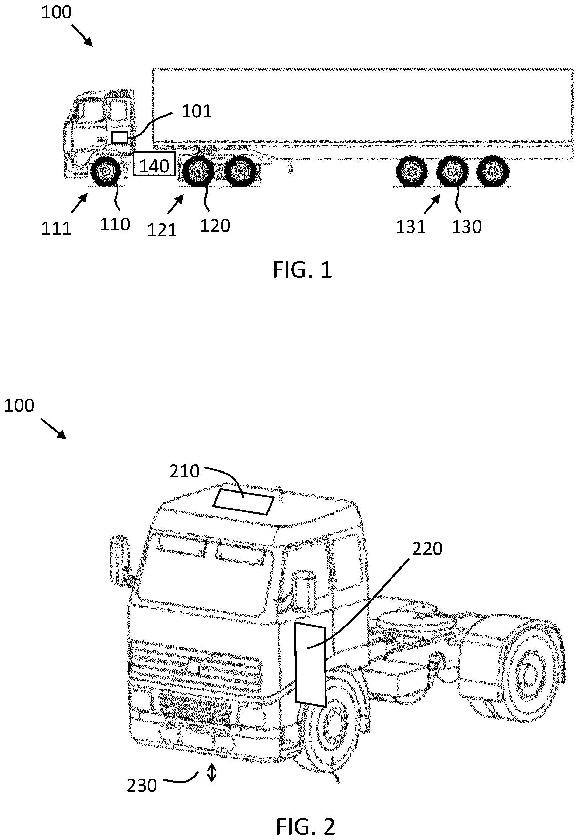

Figure 1 illustrates an example heavy-duty vehicle combination 100 for cargo transport. The vehicle combination 100 comprises a truck or towing vehicle configured to tow a trailer unit in a known manner, e.g., by a fifth wheel connection. Each of the vehicle units may comprise means for generating negative torque, i.e., a braking torque to decelerate the vehicle combination 100. The vehicle combination 100 comprises wheels 110, 120, and 130. The combination further comprises an ESS 140 such as a rechargeable battery and an electronic control unit 101 for, i.a., controlling motion of the vehicle combination. The vehicle 100 may furthermore comprise a fuel cell stack configured to generate electrical power from a hydrogen storage tank.

Herein, a heavy-duty vehicle 100 is taken to be a vehicle designed for the handling and transport of heavier objects or large quantities of cargo. As an example, a heavy-duty vehicle could be a semi-trailer vehicle, or a truck as described above. As another example, a heavy-duty vehicle could be a vehicle designed for use in construction, mining operations, and the like. It is appreciated that the techniques and devices disclosed herein can be applied together with a wide variety of electrically powered vehicle units, not just those exemplified in Figure 1. Thus, the techniques disclosed herein are also applicable to, e.g., rigid trucks and also multi-trailer electric heavy-duty vehicles comprising one or more dolly vehicle units.

The truck, and potentially also the trailer unit, comprise one or more electric machines 111, 121, 131 for propulsion and regenerative braking, such as axial flux electric machines. The electric machine then acts as a generator which converts the kinetic energy from the vehicle into electrical energy. This electrical energy can be fed to one or more energy absorption devices, which can be an electrical energy storage system (ESS) such as a rechargeable battery or super capacitor. An electrical energy absorption device can also be a device that dissipates electrical energy, such as a brake resistor which converts the electrical energy to heat without providing any useful effect such as braking or energy storage. An electrical energy absorption device may also be a combination of devices that store electrical energy and devices that dissipate electrical energy.

A heavy-duty vehicle such as the vehicle 100 normally comprises friction brakes to complement the regenerative braking by the electric machine. However, it is required to be able to brake the vehicle 100 as it travels down steep long hills and the like, where friction brakes risk onset of brake fading. Thus, an endurance braking system, such as an engine brake or hydraulic brake system for prolonged periods of braking may be required in addition to the regenerative brakes and the friction brakes.

Electric machines do not suffer from brake fading, but since the total energy absorption capability of the ESS and brake resistor is limited, the electric machine may still not be able to perform endurance braking for prolonged periods of time. Thus, either additional means for braking need to be installed in the vehicle, or the requirements on the electrical energy system of the vehicle must be over-dimensioned to support endurance braking, which is undesired.

Referring back to Figure 1, the electric machines 111, 121, 131 are connected to an ESS. Electrical energy from the electric machine generated during braking is fed to the ESS as long as the ESS can absorb the power. When the ESS is fully charged, no more energy can be absorbed by it. Furthermore, there may be a limit on maximum current or voltage that can be fed to the ESS when charging. If the ESS cannot accept all energy from the electric machine, surplus energy can be fed to a brake resistor which dissipates the surplus energy as heat. A braking system may therefore comprise a switch, which is arranged to distribute the generated electrical energy from the electric machine to the ESS and/or brake resistor. However, the brake resistor has a maximum amount of power it can absorb since it will eventually get too hot. Furthermore, there is normally a peak power capability of the brake resistor, i.e., there may be a limit on maximum current or voltage that can be fed to the brake resistor.

A fuel cell stack is normally associated with some minimum level of energy output and cannot easily be turned off. This minimum level of power output will also contribute to energy surplus during extended periods of downhill driving.

If the battery is fully charged and if the brake resistor has reached a maximum allowable temperature, there is no safe way of dispersing the power generated from the electric machine during braking. In that case, regenerative braking must stop. This problem can be alleviated somewhat by over-dimensioning the brake resistor, but that may not be sufficient in a really long slope, e.g. For this reason, additional braking means, such as friction brakes, are required. They may also be required since, as mentioned, electrical machines normally have limited peak braking torque capability. Friction brakes, however, risk onset of brake fading when the vehicle travels down steep long hills and the like. Alternatively, or in combination of, additional braking means can comprise an eddy current brake. However, it may be desirable to add even further additional braking means or reduce the requirements of the additional braking means.

Consequently, there is a need for further improvements in braking arrangements for heavy-duty vehicles which can provide sufficient braking torque, also for extended periods of time. It is also desired to simplify control of the regenerative energy system on the vehicle. It is desirable to be able to control the energy generation from regenerative braking, especially during extended periods of downhill sections of a planned route. Energy generation can include energy rate (i.e., power) and total energy during the planned route.

The present disclosure improves braking and energy management by allowing the vehicle to be configured with a range of different air resistances, where the air resistance is configurable in dependence of different operating scenarios. The present disclosure aims to predict how much energy that can be expected from regenerative braking over a coming time period of, say, e.g., a few minutes to a few hours. A vehicle motion management (VMM) function keeps track of the current energy absorption capability of one or more energy absorption devices of the vehicle, including ESS, braking resistances, eddy current brakes etc. A traffic situation management (TSM) function and higher layers in a vehicle control stack keeps track of future sections of road which need to be travelled along the planned route. The VMM then adapts the air resistance according to scenario, such as an extended downhill section. If a surplus of energy is expected, then the VMM will increase air resistance, while air resistance will be reduced down to a minimum in case of an energy shortage.

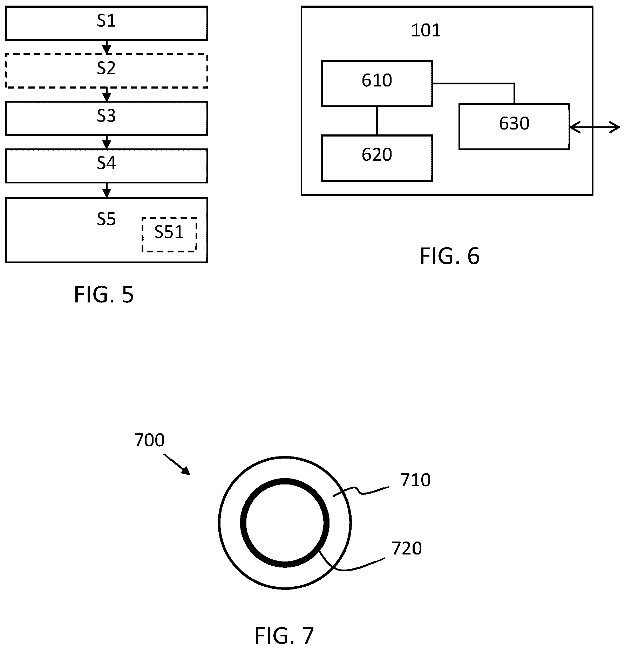

More specifically, there is disclosed herein a method for adapting air resistance of a heavy-duty vehicle 100, as illustrated in Figure 5. The vehicle comprises at least one electric machine 111, 121, 131 arranged for regenerative braking, one or more energy absorption devices 140 arranged to receive energy from the at least one electrical machine during regenerative braking, and a variable air resistance arrangement 210, 220, 230 arranged to provide a range of different air resistances of the vehicle. The method comprises: obtaining S1 a current energy absorption capability of the one or more energy absorption devices 140; obtaining S3 an expected energy generation from regenerative braking during a planned route of the vehicle and during a nominal value of air resistance of the vehicle 100; determining S4 a desired air resistance of the vehicle 100 from the range of different air resistances of the vehicle based on the current energy absorption capability and the expected energy generation; and adapting S5 the variable air resistance arrangement 210, 220, 230 according to the desired air resistance.

Air resistance, also called drag, is a force which tends to slow the movement of a vehicle through air. The force acts in a direction opposite to the movement direction of the vehicle and increases as the vehicle moves faster. The air resistance of a vehicle can be approximated by

$$F_{\text{air}} = \frac{1}{2} C_{\text{drag}} \varrho A v^2$$

where $C_{\text{drag}}$ is a drag coefficient, $\varrho$ is the density of the air, $A$ is a cross sectional area of the vehicle, and v is the speed of the vehicle. In general, the variable air resistance arrangement is some sort of arrangement for changing the air resistance, e.g., by adapting the area of the vehicle or by adapting the drag coefficient. In particular, the variable air resistance arrangement may comprise any of: a variable suspension 230 of the vehicle, a variable spoiler 210 arranged on the vehicle 100, and a variable deflector 220 arranged on the vehicle. Other arrangements are also possible. A spoiler on a vehicle is typically some sort of deflector, e.g., a narrow plate arranged along the roof, arranged to reduce a tendency of the vehicle to lift off the road at high speeds. The orientation of the spoiler can be changed for changing air resistance, e.g., by changing the angle the spoiler in respect to the forward direction of the vehicle. More generally, the variable air resistance arrangement can be any type of adaptable air deflector, such as a flap arranged on the side of the vehicle. The variable suspension of the vehicle may be used to change the clearance underneath the vehicle, which in turn affects the air resistance of the vehicle.

Adapting the variable air resistance arrangement 210, 220, 230 according to the desired air resistance means to change a setting of the arrangement, such as an angle of a spoiler or deflector, or a clearance height. If the variable air resistance arrangement comprises a plurality of adaptable elements, multiple settings may result in the same air resistance. In that case, the method may comprise selecting the combination of settings that improves a secondary objective, such as minimizing turbulence.

According to aspects, the energy absorption capability of the energy absorption device 140 includes a maximum amount of energy that the energy absorption device 140, 240 can absorb to reach a desired energy level, e.g., the maximum capacity of a battery. The energy absorption capability can also include a maximum rate of energy absorption by the energy absorption device 140, 240, i.e., a maximum power. As mentioned, the VMM function may keep track of the current energy absorption capability. The current energy absorption capability may also be obtained from other systems or functions.

For a battery 140, an energy absorption capability may be determined by the difference between the current state of charge of the battery 140 and the maximum charge of the battery 140. For example, it the battery is fully charged, the energy absorption capability may be zero. For a brake resistor, an energy absorption capability may be determined by the power rating of the brake resistor, i.e., the amount of power that can be dissipated via the brake resistor without causing it to overheat or become damaged. It is appreciated that the energy absorption capability of a device can vary over time, both short-term and long-term. For instance, an already overheated brake resistor will have a smaller energy absorption capability compared to a cool un-used brake resistor, causing variation over time-spans such as tens of minutes or even tens of seconds. A new battery often has better energy absorption capabilities compared to an older more worn battery. The energy absorption capability may also range over a time span of months or even years.

The TSM function and higher layers may keep track of the planned route, i.e., one or more sections of road that the vehicle will traverse, such as a downhill section. Using that, the expected energy generation from regenerative braking during the planned route of the vehicle can be determined. The expected energy generation may also be obtained from other systems or functions.

The expected energy generation is determined for a nominal value of air resistance of the vehicle 100. Preferably, the nominal value is a predetermined value of air resistance in the range of different air resistances of the vehicle that the variable air resistance arrangement 210, 220, 230 is arranged to generate. In that case, the nominal value may, e.g., be the lowest value of air resistance in the range, or a value in the middle of the range. If the nominal value is in the middle of the range, the variable air resistance arrangement 210, 220, 230 can be adapted to increase or decrease the actual energy generation from regenerative braking during the planned route. If the actual air resistance is changed, more or less negative torque is required from the at least one electric machine 111, 121, 131 to provide the same braking torque to slow down the vehicle. These relationships may be determined and tabulated from practical experiments involving different vehicle types. The relationships may also be at least partly determined from analytical analysis and/or computer simulation.

The desired air resistance of the vehicle 100 is the actual air resistance that increase or decrease the actual energy generation from regenerative braking compared to the expected energy generation for the nominal value of air resistance. If the actual air resistance should increase or decrease depends on the scenario. Thus, the desired air resistance is determined based on the current energy absorption capability and the expected energy generation. The desired air resistance can be determined by the VMM function, or by other means.

The estimated energy generation (in Joules and/or Watts) from regenerative braking in a given driving scenario for different air resistance configurations can be tabulated beforehand by experimentation and/or mathematical analysis which may involve computer simulation. However, additional advantages can be obtained if the energy generation in different operating conditions is logged. This way the estimate of how much energy that can be expected from regenerative braking can be improved in accuracy. For instance, if a given vehicle drives down a hill having a certain slope and carrying a given amount of cargo generates a certain amount of energy, then this amount and the driving conditions can be written to memory. The next time the vehicle drives down a similar slope carrying a similar load, the estimate of generated energy will be more accurate. Interpolation can of course be used to estimate energy generation for a scenario which resembles some already experienced scenarios. The gathered data about regenerated energy in different driving conditions and with different air resistance configurations can also be shared with other vehicles, e.g., via a remote server. This way the estimate of the regenerative amount of energy is further improved since more data will be available.

The desired air resistance may be larger than or equal to the nominal value if the expected energy generation is larger than or equal to the current energy absorption capability. For example, if a surplus of energy is expected, the desired air resistance will be increased compared to the nominal value. If, e.g., the battery 140 is half full and the expected energy generation exceeds the energy required to fully charge the battery, the desired air resistance will be increased to reduce the actual energy generation. In another example, the desired air resistance is increased to reduce the actual energy generation because a brake resistor is anticipated to heat up too quickly otherwise. It is understood that the vehicle may also be complemented with additional braking means if the increased air resistance is not enough to reduce the actual energy generation sufficiently. Furthermore, the desired air resistance may be lower than or equal to the nominal value if the expected energy generation is lower than or equal to the current energy absorption capability.

If one of the one or more energy absorption devices 140 is an electronic storage system (ESS), the method may further comprise obtaining S2 a current state of charge (SoC) of the ESS 140. In that case, the desired air resistance of the vehicle 100 is determined S51 based on the current energy absorption capability, the expected energy generation, and the current SoC.

The desired air resistance may be larger than or equal to the nominal value if the SoC is larger than or equal to a predetermined threshold. If, e.g., the battery 140 is empty or only charged up to a level well below full charge, it may be desirable to decrease the desired air resistance to increase the actual energy generation. Furthermore, the desired air resistance may be lower than or equal to the nominal value if the SoC is lower than or equal to a predetermined threshold.

There is also disclosed herein an electronic control unit (ECU) 101 for adapting air resistance of a heavy-duty vehicle 100. The vehicle comprises at least one electric machine 111, 121, 131 arranged for regenerative braking, one or more energy absorption devices 140 arranged to receive energy from the at least one electrical machine during regenerative braking, and a variable air resistance arrangement 210, 220, 230 arranged to generate a range of different air resistances of the vehicle. The ECU is arranged to: obtain a current energy absorption capability of the one or more energy absorption devices 140; obtain an expected energy generation from regenerative braking during a planned route of the vehicle 100 and during a nominal value of air resistance of the vehicle 100; determine a desired air resistance of the vehicle 100 based on the current energy absorption capability and the expected energy generation; and adapt the variable air resistance arrangement 210, 220, 230 according to the desired air resistance.

Any of the TSM function and the VMM function may be performed by the ECU 101 or by one or more separate units.

There is also disclosed herein a vehicle 100 comprising the ECU 101 according to the discussion above.

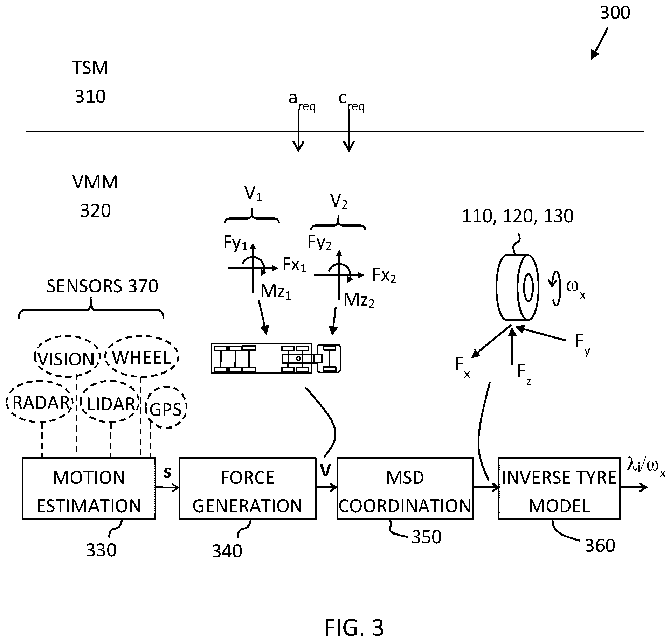

Figure 3 schematically illustrates functionality 300 for controlling one or more wheels 110, 120, 130 by some example motion support devices (MSDs), here comprising at least the electric machine 111, 121, 131 and the variable air resistance arrangement 210, 220, 230. The control is based on, e.g., measurement data obtained from vehicle sensors 370 such as wheel speed sensors, global positioning system (GPS) sensors, radar sensors, lidar sensors, and also vision-based sensors such as camera sensors and infra-red detectors.

The control may also be based on topological data indicating a height profile of a planned route. This topological data together with an estimated gross cargo weight can be used to determine a need for braking the heavy duty vehicle 100 along the route.

A TSM function 310 plans driving operation with a time horizon of, e.g., 10 seconds or so. This time frame corresponds to, e.g., the time it takes for the vehicle 100 to negotiate a curve. The time horizons can be much longer, however, such as in the order of hours. The vehicle maneuvers, planned and executed by the TSM, can be associated with acceleration profiles $a_{req}$ and curvature profiles $c_{req}$ which describe a desired vehicle velocity and turning for a given maneuver. An example acceleration profile $a_{req}$ comprises the target deceleration value required to transverse a downhill section of the road. The TSM function 310 continuously requests the desired acceleration profiles $a_{req}$ and curvature profiles $c_{req}$ from a VMM function 320 which performs force allocation to meet the requests from the TSM in a safe and robust manner. The VMM function continuously feeds back capability information to the TSM function detailing the current capability of the vehicle in terms of, e.g., forces, maximum velocities, and accelerations which can be generated.

The VMM function 320 operates with a time horizon of about 1 second or so, and continuously transforms the acceleration profiles $a_{req}$ and curvature profiles $c_{req}$ into control commands for controlling vehicle motion functions, actuated by the different MSDs of the vehicle 100 which in turn report back capabilities to the VMM function 320. The different capabilities are used by the VMM function as constraints in the vehicle control.

The VMM function 320 performs vehicle state or motion estimation 330, i.e., the VMM function 320 continuously determines a vehicle state s comprising positions, speeds, accelerations, and articulation angles of the different units in the vehicle combination by monitoring operations using various sensors 370 arranged on the vehicle 100, often but not always in connection to the MSDs.

The result of the motion estimation 330, i.e., the estimated vehicle state s, is input to a force generation module 340 which determines the required global forces and moments Fx Fy Mz, $V=[V_1, V_2, V_3]$, and for the different vehicle units to cause the vehicle 100 to move according to the requested acceleration and curvature profiles $a_{req}$, $c_{req}$. The required global force vector V is input to an MSD coordination function 350 which allocates wheel forces and also coordinates other MSDs such as steering and suspension. The coordinated MSDs then together provide the desired lateral Fy and longitudinal Fx forces on the vehicle units, as well as the required moments Mz, to obtain the desired motion by the vehicle combination 100.

By determining vehicle unit motion using, e.g., global positioning systems, vision-based sensors, wheel speed sensors, radar sensors and/or lidar sensors, and translating this vehicle unit motion into a local coordinate system of a given wheel (in terms of, e.g., longitudinal and lateral velocity components), it becomes possible to accurately estimate wheel slip in real time by comparing the vehicle unit motion in the wheel reference coordinate system to data obtained from the wheel speed sensor arranged in connection to the wheel.

A tire model can be used to translate between a desired longitudinal tire force $Fx_i$ for a given wheel i and an equivalent wheel slip $\lambda_i$ for the wheel. Wheel slip $\lambda$ relates to a difference between wheel rotational velocity and speed over ground and will be discussed in more detail below. Wheel speed $\omega$ is a rotational speed of the wheel, given in units of, e.g., rotations per minute (rpm) or angular velocity in terms radians/second (rad/sec) or degrees/second (deg/sec). A tire model is a model of wheel behavior which describes wheel force generated in longitudinal direction (in the rolling direction) and/or lateral direction (orthogonal to the longitudinal direction) as function of wheel slip. In "Tyre and vehicle dynamics", Elsevier Ltd. 2012, ISBN 978-0-08-097016-5, Hans Pacejka covers the fundamentals of tire models. See, e.g., chapter 7 where the relationship between wheel slip and longitudinal force is discussed.

To summarize, the VMM function 320 manages both force generation and MSD coordination, i.e., it determines what forces that are required at the vehicle units in order to fulfil the requests from the TSM function 310, for instance to accelerate the vehicle according to a requested acceleration profile requested by TSM and/or to generate a certain curvature motion by the vehicle also requested by TSM. The forces may comprise e.g., yaw moments Mz, longitudinal forces Fx and lateral forces Fy, as well as different types of torques to be applied at different wheels.

According to aspects, the TSM 310 function optionally complemented by higher control layers keep track of future downhill sections of road which need to be traversed. Thus, the vehicle may determine, e.g., how many height-meters which must be descended and ascended along a given route. This data together with data indicating, e.g., gross cargo weight can be used to determine an estimated amount of energy which will be regenerated during downhill sections of the route to be travelled by the vehicle 100. The vehicle control system may, as mentioned above, be pre-configured with data indicating how much energy that can be expected to be generated for a given driving scenario, i.e., per unit of time for a given degree of slope and for different vehicle loads. This data may also be dynamically obtained or refined over time, by measuring an actual amount of regenerated energy for different downhill driving conditions. The data can then be used to predict an amount of regenerated energy from a future downhill driving scenario. This predicted amount of regenerated energy can then be compared to the estimated energy absorption capability of the vehicle, and the air resistance property of the vehicle can be adapted accordingly.

For example, suppose air resistance can be configured in ten different settings ranging from 1-10, where 10 is the least amount of air resistance and 10 is the most amount of air resistance. Suppose further that the vehicle energy absorption capability is X Joules, and that the vehicle is about to travel down a hill with a given slope for a given distance. The vehicle can then consult its database where estimates of regenerated energy for each of the ten different air resistances are tabulated for similar driving conditions, and thus pick a suitable air resistance configuration for the planned route.

As another example, consider a planned route having a given height profile. The vehicle can then predict a SoC for the planned route based on the height profile. If this SoC exceeds a capacity of the ESS, then the vehicle air resistance can be increased for key portions of the route to avoid occurrences of a SoC above capacity.

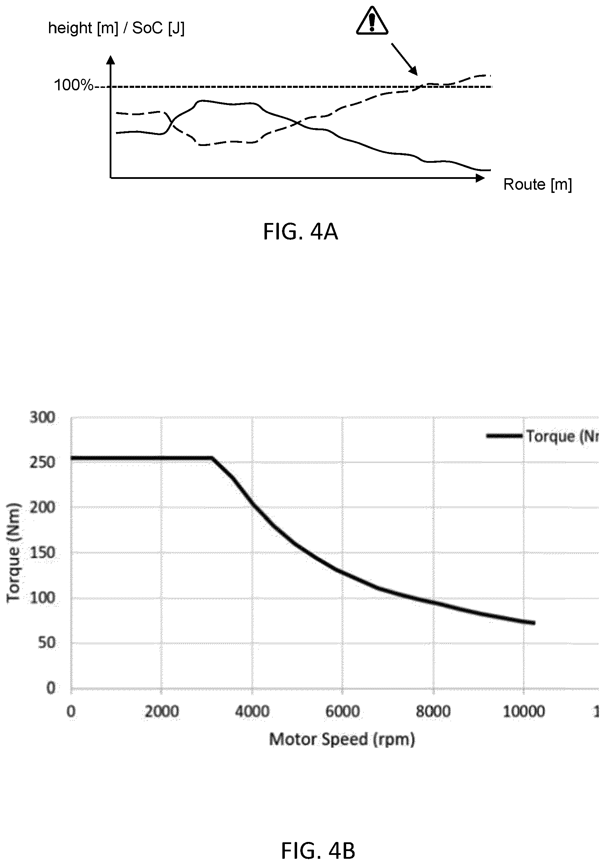

An example of a height profile along a route is shown in Figure 4A as a solid line. The dashed line shows expected SoC along the same route for a nominal value of air resistance. It can be seen that the SoC decreases in uphill sections of the route and increases in downhill sections of the route. At the end of this route the expected SoC exceeds 100%, which is undesired. This can be avoided by using the method of the present disclosure. The planned route of the disclosed method can be the whole route in Figure 4A, sections of the route in Figure 4A, or a combination of both. If the planned route is the whole route in the figure, a single desired air resistance may be determined to keep the SoC below fully charged. If the planned route comprises one or more sections of the route in the figure, different desired air resistances may be determined for the different sections. Optionally, the determined air resistance for each section may be determined based on the current section and future sections.

The expected SoC in Figure 4A may be determined from the current energy absorption capability of the one or more energy absorption devices 140 and the expected energy generation from regenerative braking. The expected energy generation can be obtained from a known torque behavior of the at least one electric machine 111, 121, 131. An example of torque versus motor speed (in revolutions per minute, rpm) is shown in Figure 4B. The relationship between required torque and different scenarios is discussed in more detail below. The VMM function 320 keeps track of the current energy absorption capability of the vehicle, including braking resistances, eddy current brakes, battery SoC, etc. The VMM can then determine how to best adapt the variable air resistance to increase or decrease the actual energy generation from regenerative braking during the planned route.

The interface between VMM and MSDs capable of delivering torque to the vehicle's wheels has, traditionally, been focused on torque-based requests to each MSD from the VMM without any consideration towards wheel slip. However, this approach has significant performance limitations. In case a safety critical or excessive slip situation arises, then a relevant safety function (traction control, anti-lock brakes, etc.) operated on a separate control unit normally steps in and requests a torque override in order to bring the slip back into control. The problem with this approach is that since the primary control of the actuator and the slip control of the actuator are allocated to different electronic control units (ECUs), the latencies involved in the communication between them significantly limits the slip control performance. Moreover, the related actuator and slip assumptions made in the two ECUs that are used to achieve the actual slip control can be inconsistent and this in turn can lead to sub-optimal performance.

Significant benefits can be achieved by instead using a wheel speed or wheel slip-based request on the interface between VMM and the MSD controller, thereby shifting the difficult actuator speed control loop to the MSD controllers, which generally operate with a much shorter sample time compared to that of the VMM function. Such an architecture can provide much better disturbance rejection compared to a torque-based control interface and thus improves the predictability of the forces generated at the tire road contact patch.

With reference to Figure 3, the inverse tire model block 360 translates the required wheel forces $Fx_i$, $Fy_i$ determined for each wheel, or for a subset of wheels, by the MSD coordination block 350 into equivalent wheel speeds $\omega_{wi}$ or wheel slips $\lambda_i$. These wheel speeds or slips are then sent to the respective MSD controllers. The MSD controllers report back capabilities which can be used as constraints in, e.g., the MSD coordination block 350.

Longitudinal wheel slip $\lambda$ may, in accordance with SAE J670 (SAE Vehicle Dynamics Standards Committee January 24, 2008) be defined as

$$\lambda = \frac{R\omega_x - v_x}{max(|R\omega|, |v_x|)}$$

where R is an effective wheel radius in meters, $\omega_x$ is the angular velocity of the wheel, and $v_x$ is the longitudinal speed of the wheel (in the coordinate system of the wheel). Thus, $\lambda$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel. The VMM 320 and optionally also the MSD control units, maintains information on $v_x$ (in the reference frame of the wheel), while a wheel speed sensor or the like can be used

Vehicle downhill gradeability relates to the ability of a heavy-duty vehicle to drive down long hills at constant cruising speed. The air resistance and the rolling resistance from the road decelerates the vehicle, while the gravitational pull on the vehicle provides accelerating force. To guarantee vehicle downhill gradeability, the electric machine, the variable air resistance arrangement 210, 220, 230, and other possible additional braking means can be dimensioned to support a constant cruising speed, e.g., somewhere between 80-110 km/h, during extended downhill driving. To design for downhill gradeability means that the electric machine is dimensioned to provide a continuous negative torque level at a given level and at a given air resistance range, and also arranged to distribute the regenerated energy to one or more energy absorption devices. The energy absorption devices are dimensioned to absorb these energy levels. Thus, vehicle downhill gradeability may be guaranteed, at least for a range of driving conditions.

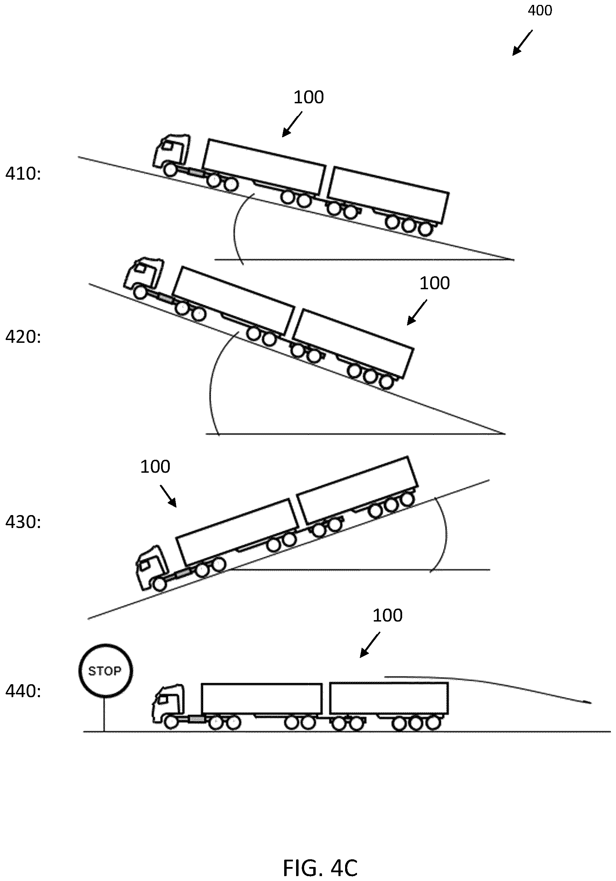

Figure 4C illustrates four use cases 400 which a heavy-duty vehicle 100 must be able to operate in. The vehicle 100 must be able to start in slopes 410 (startability), even if the vehicle 100 is heavily loaded and the road friction is not ideal. The vehicle must also be able to negotiate even steeper slopes at constant velocity 420, e.g., 70 km/h (positive gradeability). Downhill gradeability performance 430 is perhaps even more important, which means that the vehicle 100 must be able to limit speed when driving downhill for longer distances (endurance braking). Finally, acceleration and braking capability implies that peak torque requirements, both on positive and on negative torque, must be met by the vehicle MSDs.

The required longitudinal torque can be expressed as

$$F_{x,req} = m_{GCW}a_{x,req} + 0.5C_dA_f\rho_{air}v_x^2 + gC_rm_{GCW} + m_{GCW}g\sin(\text{atan}\left(\frac{s}{100}\right))$$

where $m_{GCW}$ is the vehicle gross combination weight, $a_{x,req}$ is the required acceleration (which is zero or very small for use cases 410, 420 and 430), $C_dA_f$ is the product of air drag coefficient $C_d$ and vehicle front area $A_f$, $\rho_{air}$ represents air density, $v_x$ is the vehicle speed, $g$ is the gravitational constant, $C_r$ is rolling resistance, and s is a slope percentage between 0 and 100. Using this equation, e.g., the required torque for a planned route can be obtained for nominal value of air resistance (or air drag coefficient, front area etc.). The required torque can in turn be used to determine the energy generation during downhill sections.

In uphill driving positive torque scenarios, the terms $0.5C_dA_f\rho_{air}v_x^2$ and $gC_rm_{GCW}$ must be overcome by the propulsion MSDs, while in downhill scenarios the terms instead help to brake the vehicle 100. This means that the electric machine must be dimensioned to support positive torque sufficient for use cases 410 and 420, while the combination of electric machine and other possible additional braking means must be dimensioned to provide a combined negative torque to support use cases 430 and hard braking according to use case 440.

Figure 6 schematically illustrates, in terms of a number of functional units, the components of a control unit such as the ECU 101. The control unit may implement one or more of the above discussed functions of the TSM, VMM and/or the MSD control function, according to embodiments of the discussions herein. The control unit is configured to execute at least some of the functions discussed above for control of a heavy-duty vehicle 100. Processing circuitry 610 is provided using any combination of one or more of a suitable central processing unit CPU, multiprocessor, microcontroller, digital signal processor DSP, etc., capable of executing software instructions stored in a computer program product, e.g., in the form of a storage medium 620. The processing circuitry 610 may further be provided as at least one application specific integrated circuit ASIC, or field programmable gate array FPGA.

Particularly, the processing circuitry 610 is configured to cause the control unit 101 to perform a set of operations, or steps, such as the methods discussed in connection to Figure 5. For example, the storage medium 620 may store the set of operations, and the processing circuitry 610 may be configured to retrieve the set of operations from the storage medium 620 to cause the control unit 101 to perform the set of operations. The set of operations may be provided as a set of executable instructions. Thus, the processing circuitry 610 is thereby arranged to execute methods as herein disclosed.

The storage medium 620 may also comprise persistent storage, which, for example, can be any single one or combination of magnetic memory, optical memory, solid state memory or even remotely mounted memory.

The control unit 101 may further comprise an interface 630 for communications with at least one external device. As such the interface 630 may comprise one or more transmitters and receivers, comprising analogue and digital components and a suitable number of ports for wireline or wireless communication.

The processing circuitry 610 controls the general operation of the control unit 101, e.g., by sending data and control signals to the interface 630 and the storage medium 620, by receiving data and reports from the interface 630, and by retrieving data and instructions from the storage medium 620. Other components, as well as the related functionality, of the control node are omitted in order not to obscure the concepts presented herein.

Figure 7 illustrates a computer readable medium 710 carrying a computer program comprising program code means 720 for performing the methods illustrated in Figure 6, when said program product is run on a computer. The computer readable medium and the code means may together form a computer program product 700.

**Claims**

1.  A method for adapting air resistance of a heavy-duty vehicle (100), the vehicle comprising at least one electric machine (111, 121, 131) arranged for regenerative braking, one or more energy absorption devices (140) arranged to receive energy from the at least one electrical machine during regenerative braking, and a variable air resistance arrangement (210, 220, 230) arranged to provide a range of different air resistances of the vehicle, wherein the method comprises:

    obtaining (S1) a current energy absorption capability of the one or more energy absorption devices (140); **characterized in that**
    obtaining (S3) an expected energy generation from regenerative braking during a planned route of the vehicle and during a nominal value of air resistance of the vehicle (100);
    determining (S4) a desired air resistance of the vehicle (100) from the range of different air resistances of the vehicle based on the current energy absorption capability and the expected energy generation; and
    causing adaptation (S5) of the variable air resistance arrangement (210, 220, 230) according to the desired air resistance.

2.  The method according to claim 1, wherein the desired air resistance is larger than or equal to the nominal value if the expected energy generation is larger than or equal to the current energy absorption capability.

3.  The method according to any previous claim, wherein the desired air resistance is lower than or equal to the nominal value if the expected energy generation is lower than or equal to the current energy absorption capability.

4.  The method according to any previous claim, wherein the variable air resistance arrangement comprises any of: a variable suspension (230) of the vehicle, a variable spoiler (210) arranged on the vehicle (100), and a variable deflector (220) arranged on the vehicle.

5.  The method according to any previous claim, wherein one of the one or more energy absorption devices (140) is an electronic storage system, ESS.

6.  The method according to claim 5, further comprising obtaining (S2) a current state of charge, SoC, of the ESS (140), wherein the desired air resistance of the vehicle (100) is determined (S51) based on the current energy absorption capability, the expected energy generation, and the current SoC.

7.  The method according to claim 6, wherein the desired air resistance is larger than or equal to the nominal value if the SoC is larger than or equal to a predetermined threshold.

8.  The method according to any of claims 6-7, wherein the desired air resistance is lower than or equal to the nominal value if the SoC is lower than or equal to a predetermined threshold.

9.  A computer program (720) comprising program code means for performing the steps of any of claim 1-8 when said program is run on a computer or on processing circuitry (710) of an electronic control unit, ECU, (101).

10. A computer readable medium (710) carrying a computer program (720) comprising program code means for performing the steps of any of claims 1-8 when said program product is run on a computer or on processing circuitry (710) of an electronic control unit, ECU, (101).

11. An electronic control unit, ECU, (101) for adapting air resistance of a heavy-duty vehicle (100), the vehicle comprising at least one electric machine (111, 121, 131) arranged for regenerative braking, one or more energy absorption devices (140) arranged to receive energy from the at least one electrical machine during regenerative braking, and a variable air resistance arrangement (210, 220, 230) arranged to generate a range of different air resistances of the vehicle, wherein the ECU is arranged to:
    obtain a current energy absorption capability of the one or more energy absorption devices (140); and **characterized**

**by**:

obtain an expected energy generation from regenerative braking during a planned route of the vehicle (100) and during a nominal value of air resistance of the vehicle (100);
determine a desired air resistance of the vehicle (100) based on the current energy absorption capability and the expected energy generation; and
cause adaptation of the variable air resistance arrangement (210, 220, 230) according to the desired air resistance.

12. The ECU (101) according to claim 11, wherein the variable air resistance arrangement comprises any of: a variable suspension (230) of the vehicle, a variable spoiler (210) arranged on the vehicle (100), and a variable deflector (220) arranged on the vehicle.

13. The ECU (101) according to any of claims 11-12, wherein one of the one or more energy absorption devices (140) is an electronic storage system, ESS.

14. The ECU (101) according to claim 13, further arranged to obtain a current state of charge, SoC, of the ESS (140), wherein the desired air resistance of the vehicle (100) is determined based on the current energy absorption capability, the expected energy generation, and the current SoC.

15. A vehicle (100) comprising the ECU (101) according to any of claims 11-14.

**Patentansprüche**

1. Verfahren zum Anpassen des Luftwiderstands eines Schwerlastfahrzeugs (100), wobei das Fahrzeug mindestens eine für regeneratives Bremsen eingerichtete elektrische Maschine (111, 121, 131), eine oder mehrere Energieabsorptionsvorrichtungen (140), die zum Empfangen von Energie von der mindestens einen elektrischen Maschine während des regenerativen Bremsens eingerichtet sind, und eine variable Luftwiderstandsanordnung (210, 220, 230) umfasst, die so eingerichtet ist, dass sie einen Bereich unterschiedlicher Luftwiderstände des Fahrzeugs bereitstellt, wobei das Verfahren umfasst:

Erhalten (S1) einer aktuellen Energieabsorptionsfähigkeit der einen oder mehreren Energieabsorptionsvorrichtungen (140); **dadurch gekennzeichnet, dass**
Erhalten (S3) einer erwarteten Energieerzeugung aus regenerativem Bremsen während einer geplanten Route des Fahrzeugs und während eines Nennwerts des Luftwiderstands des Fahrzeugs (100); Bestimmen (S4) eines gewünschten Luftwiderstands des Fahrzeugs (100) aus dem Bereich verschiedener Luftwiderstände des Fahrzeugs auf der Grundlage der aktuellen Energieabsorptionsfähigkeit und der erwarteten Energieerzeugung; und
Veranlassen der Anpassung (SS) der variablen Luftwiderstandsanordnung (210, 220, 230) entsprechend dem gewünschten Luftwiderstand.

2. Verfahren nach Anspruch 1, wobei der gewünschte Luftwiderstand größer oder gleich dem Nennwert ist, wenn die erwartete Energieerzeugung größer oder gleich der aktuellen Energieabsorptionsfähigkeit ist.

3. Verfahren nach einem der vorhergehenden Ansprüche, wobei der gewünschte Luftwiderstand kleiner oder gleich dem Nennwert ist, wenn die erwartete Energieerzeugung kleiner oder gleich der aktuellen Energieabsorptionsfähigkeit ist.

4. Verfahren nach einem der vorhergehenden Ansprüche, wobei die variable Luftwiderstandsanordnung eines der folgenden Elemente umfasst: eine variable Aufhängung (230) des Fahrzeugs, einen variablen Spoiler (210)angeordnet am Fahrzeug (100), und einen variablen Deflektor (220) angeordnet am Fahrzeug .

5. Verfahren nach einem der vorhergehenden Ansprüche, wobei eine der einen oder mehreren Energieabsorptionsvorrichtungen (140) ein elektronisches Speichersystem (ESS) ist.

6. Verfahren nach Anspruch 5, ferner umfassend das Erhalten (S2) eines aktuellen Ladezustands, SoC, des ESS (140), wobei der gewünschte Luftwiderstand des Fahrzeugs (100) bestimmt wird (S51) auf der Grundlage der aktuellen Energieabsorptionsfähigkeit, der erwarteten Energieerzeugung und des aktuellen SoC .

7. Verfahren nach Anspruch 6, wobei der gewünschte Luftwiderstand größer oder gleich dem Nennwert ist, wenn der SoC größer oder gleich einem vorgegebenen Schwellenwert ist.

8. Verfahren nach einem der Ansprüche 6 bis 7, wobei der gewünschte Luftwiderstand kleiner oder gleich dem Nennwert ist, wenn der SoC-Wert kleiner oder gleich einem vorgegebenen Schwellenwert ist.

9. Computerprogramm (720) mit Programmcodemitteln zur Durchführung der Schritte nach einem der Ansprüche 1 bis 8, wenn das Programm auf einem Computer oder einer Verarbeitungsschaltung (710) einer elektronischen Steuereinheit, ECU, (101) ausgeführt wird.

10. Computerlesbares Medium (710) mit einem Computerprogramm (720), das Programmcodemittel zum Ausführen der Schritte nach einem der Ansprüche 1 bis 8 umfasst, wenn das Programmprodukt auf einem Computer oder einer Verarbeitungsschaltung (710) einer elektronischen Steuereinheit, ECU, (101) ausgeführt wird.

11. Elektronische Steuereinheit, ECU, (101) zum Anpassen des Luftwiderstands eines Schwerlastfahrzeugs (100), wobei das Fahrzeug mindestens eine für regeneratives Bremsen eingerichtete elektrische Maschine (111, 121, 131), eine oder mehrere Energieabsorptionsvorrichtungen (140), die zum Empfangen von Energie von der mindestens einen elektrischen Maschine während des regenerativen Bremsens eingerichtet sind, und eine variable Luftwiderstandsanordnung (210, 220, 230) umfasst, die so angeordnet ist, dass sie einen Bereich unterschiedlicher Luftwiderstände des Fahrzeugs erzeugt, wobei die ECU angeordnet ist,
eine aktuelle Energieabsorptionsfähigkeit der einen oder mehreren Energieabsorptionsvorrichtungen (140) zu erhalten; und **gekennzeichnet dadurch**:

Erhalten eine erwartete Energieerzeugung aus regenerativem Bremsen während einer geplanten Route des Fahrzeugs (100) und während eines Nennwerts des Luftwiderstands des Fahrzeugs (100) zu erhalten; einen gewünschten Luftwiderstand des Fahrzeugs (100) basierend auf der aktuellen Energieabsorptionsfähigkeit und der erwarteten Energieerzeugung zu bestimmen; und
die Anpassung der variablen Luftwiderstandsanordnung (210, 220, 230) entsprechend dem gewünschten Luftwiderstand zu veranlassen.

12. ECU (101) nach Anspruch 11, wobei die variable Luftwiderstandsanordnung eines der folgenden Elemente umfasst: eine variable Aufhängung (230) des Fahrzeugs, einen variablen Spoiler (210)angeordnet am Fahrzeug (100) , und einen variablen Deflektor (220) angeordnet am Fahrzeug .

13. ECU (101) nach einem der Ansprüche 11 bis 12, wobei eine der einen oder mehreren Energieabsorptionsvorrichtungen (140) ein elektronisches Speichersystem (ESS) ist.

14. ECU (101) nach Anspruch 13, das ferner so eingerichtet ist, dass es einen aktuellen Ladezustand, SoC, des ESS (140) erhält, wobei der gewünschte Luftwiderstand des Fahrzeugs (100) auf der Grundlage der aktuellen Energieabsorptionsfähigkeit, der erwarteten Energieerzeugung und des aktuellen SoC bestimmt wird.

15. Fahrzeug (100) mit der ECU (101) gemäß einem der Ansprüche 11-14.


**Revendications**

1. Procédé d'adaptation de la résistance à l'air d'un véhicule utilitaire lourd (100), le véhicule comprenant au moins une machine électrique (111, 121, 131) agencée pour un freinage par récupération, un ou plusieurs dispositifs d'absorption d'énergie (140) agencés pour recevoir de l'énergie de l'au moins une machine électrique pendant le freinage par récupération, et un agencement de résistance à l'air variable (210, 220, 230) agencé pour fournir une plage de résistances à l'air différentes du véhicule, dans lequel le procédé comprend :

l'obtention (S1) d'une capacité d'absorption d'énergie actuelle du ou des plusieurs dispositifs d'absorption d'énergie (140) ; **caractérisé par**
l'obtention (S3) d'une génération d'énergie attendue à partir du freinage par récupération pendant un itinéraire planifié du véhicule et pendant une valeur nominale de résistance à l'air du véhicule (100) ;

la détermination (S4) d'une résistance à l'air souhaitée du véhicule (100) à partir de la plage de résistances à l'air différentes du véhicule sur la base de la capacité d'absorption d'énergie actuelle et de la génération d'énergie attendue ; et

l'entraînement d'une adaptation (S5) de l'agencement de résistance à l'air variable (210, 220, 230) selon la résistance à l'air souhaitée.

2. Procédé selon la revendication 1, dans lequel la résistance à l'air souhaitée est supérieure ou égale à la valeur nominale si la génération d'énergie attendue est supérieure ou égale à la capacité d'absorption d'énergie actuelle.

3. Procédé selon l'une des revendications précédentes, dans lequel la résistance à l'air souhaitée est inférieure ou égale à la valeur nominale si la génération d'énergie attendue est inférieure ou égale à la capacité d'absorption d'énergie actuelle.

4. Procédé selon l'une des revendications précédentes, dans lequel l'agencement de résistance à l'air variable comprend l'un quelconque parmi : une suspension variable (230) du véhicule, un becquet variable (210) agencé sur le véhicule (100) et un déflecteur variable (220) agencé sur le véhicule.

5. Procédé selon l'une des revendications précédentes, dans lequel l'un du ou des plusieurs dispositifs d'absorption d'énergie (140) est un système de stockage électronique, ESS.

6. Procédé selon la revendication 5, comprenant en outre l'obtention (S2) d'un état de charge actuel, SoC, de l'ESS (140), dans lequel la résistance à l'air souhaitée du véhicule (100) est déterminée (S51) sur la base de la capacité d'absorption d'énergie actuelle, de la génération d'énergie attendue et du SoC actuel.

7. Procédé selon la revendication 6, dans lequel la résistance à l'air souhaitée est supérieure ou égale à la valeur nominale si le SoC est supérieur ou égal à un seuil prédéterminé.

8. Procédé selon l'une des revendications 6 et 7, dans lequel la résistance à l'air souhaitée est inférieure ou égale à la valeur nominale si le SoC est inférieur ou égal à un seuil prédéterminé.

9. Programme informatique (720) comprenant des moyens de code de programme pour réaliser les étapes de l'une des revendications 1 à 8 lorsque ledit programme est exécuté sur un ordinateur ou sur un ensemble de circuits de traitement (710) d'une unité de commande électronique, ECU, (101).

10. Support lisible par ordinateur (710) portant un programme informatique (720) comprenant des moyens de code de programme pour réaliser les étapes de l'une des revendications 1 à 8 lorsque ledit produit de programme est exécuté sur un ordinateur ou sur un ensemble de circuits de traitement (710) d'une unité de commande électronique, ECU, (101).

11. Unité de commande électronique, ECU, (101) pour adapter la résistance à l'air d'un véhicule utilitaire lourd (100), le véhicule comprenant au moins une machine électrique (111, 121, 131) agencée pour un freinage par récupération, un ou plusieurs dispositifs d'absorption d'énergie (140) agencés pour recevoir de l'énergie de l'au moins une machine électrique pendant le freinage par récupération, et un agencement de résistance à l'air variable (210, 220, 230) agencé pour générer une plage de résistances à l'air différentes du véhicule, dans laquelle l'ECU est agencée pour : obtenir une capacité d'absorption d'énergie actuelle du ou des plusieurs dispositifs d'absorption d'énergie (140) ; et **caractérisée par** :

l'obtention d'une génération d'énergie attendue à partir du freinage par récupération pendant un itinéraire planifié du véhicule (100) et pendant une valeur nominale de résistance à l'air du véhicule (100) ;

la détermination d'une résistance à l'air souhaitée du véhicule (100) sur la base de la capacité d'absorption d'énergie actuelle et de la génération d'énergie attendue ; et

l'entraînement de l'adaptation de l'agencement de résistance à l'air variable (210, 220, 230) selon la résistance à l'air souhaitée.

12. ECU (101) selon la revendication 11, dans laquelle l'agencement de résistance à l'air variable comprend l'un quelconque parmi : une suspension variable (230) du véhicule, un becquet variable (210) agencé sur le véhicule (100) et un déflecteur variable (220) agencé sur le véhicule.

13. ECU (101) selon l'une des revendications 11 et 12, dans laquelle l'un du ou des plusieurs dispositifs d'absorption d'énergie (140) est un système de stockage électronique, ESS.

14. ECU (101) selon la revendication 13, agencée en outre pour obtenir un état de charge actuel, SoC, de l'ESS (140), dans laquelle la résistance à l'air souhaitée du véhicule (100) est déterminée sur la base de la capacité d'absorption d'énergie actuelle, de la génération d'énergie attendue et du SoC actuel.

15. Véhicule (100) comprenant l'ECU (101) selon l'une des revendications 11 à 14.

FIG. 1

FIG. 2

300

TSM
310

$a_{req}$  $c_{req}$

VMM
320

$V_1$  $V_2$

110, 120, 130

SENSORS 370

$Fy_1$  $Fx_1$  $Mz_1$  $Fy_2$  $Fx_2$  $Mz_2$

$\omega_x$

VISION  WHEEL

RADAR  LIDAR  GPS

$F_x$  $F_z$  $F_y$

| MOTION ESTIMATION | **s** | FORCE GENERATION | **V** | MSD COORDINATION | INVERSE TYRE MODEL | $\lambda_i/\omega_x$ |

330  340  350  360

FIG. 3

FIG. 4A

FIG. 4B

400

100

410:

100

420:

100

430:

100

STOP

440:

FIG. 4C

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107215213

**Non-patent literature cited in the description**

- **HANS PACEJKA**. Tyre and vehicle dynamics. Elsevier Ltd., 2012